# EUROPEAN PATENT APPLICATION

(11) **EP 1 830 061 A2**
(43) Date of publication of application: **05.09.2007**
(21) Application number: 07381002.0
(22) Date of filing: 12.01.2007
(51) Int. Cl.: F03D 1/04, F03G 6/04, F03G 6/06

(54) **Generator of electric current using ascendant hot air**

(30) Priority: 22.02.2006 ES 200600388 U
(71) Applicant: Villarrubia Ruiz, Jonas, 28820 Coslada Madrid (ES)
(72) Inventor: Villarrubia Ruiz, Jonas, 28820 Coslada Madrid (ES)

(57) **Abstract**

Generator of electricity type using a tower (6) of ascension of hot air. The incorporation of a solar oven (17) in a part of the tower (6) where higher temperature is applied, by concentrators or heliostats, than the ascendent air, besides the distributor of the solar energy received in its interior wall, makes the air to overheat and accelerate for the expansion and the temperature and transmist higher power in the turbine that will be used. If we also incorporate a gas-type or aviation type turbine (16) and use the sun instead of fossil or similar fuel we get an added of power that makes the installation to decreases in size less than seventy percent and triplicate the power that it generates. Then, in the night part, when the sun cannot give us that energy, we can use the energy stored to have a continuity of generating electricity by the fluids that we have heated for solar irradiation, as we do not have to use to heat the ascendent air neither ten percent of the glass area irradiated by the sun. The application of this accumulated energy will be applicated in two different ways in hours without sun: the air that goes through the accumulators and the one that overheats the air in the area of the exchanger of heat, with what duplicates what has been made so far.

## Description

### Purpose of the invention

The present invention, as it is expressed in the first enunciated of this descriptive memory, refers to improvements made in the solar towers of ascension of hot air by means of a group of structures and equipments that united, and by natural ways: sun and air, generate electricity for the consumption of the electric appliances and industrial machines.

The equipment of this patent has been studied and designed so that, during the day, with a small part, of the exposed area to the sun of the low glassed horizontal base (the rest is closed by some sluices to store higger temperature for later use), serve for the air of its interior to ascends towards the tower, to the tower and towards the turbine, move the inferior blades and penetrate in its central cavity where some concentrators of solar energy installed in half moon way around the tower and directed to the sun so its ray lights impact in the transparent area of the tower, center of the turbine (solar oven), and heat the air achieving the expansion of this one and the movement, with more power, of the superior blades. The concentrators can be different in form and size; the heliostats that follow the sun trajectory to concentrate its rays on the same place during the whole solar activity of the day would be the most suitable. The size of the transparent area that houses the central cavity of the turbine, will depend on the energy required to obtain and on the solar concentrators, the number of units solar light to apply and the total height of the tower. Inside the center of the turbine, in the the tower opposited to the glass area, where the solar rays impact reflected reflected from the heliostats or concentrators, the wall of that side, will be opaque to the exterior and covered in the interior with reflective materials so that it distributes the sunbeams in a homogeneous way. This part of the tower that we will call SOLAR OVEN, as is where the solar rays converge and where, depending on the quantity of solar concentrators or heliostats high temperatures are gotten heating the air that circulates for its interior.

In this part of the SOLAR OVEN, there is also a heat exchanger that receives part of that temperature, which has oil circulating through that, once reaches the suitable temperature, will be stored for the night hours. The object of the invention is to get higger speed in the surrounding and upward air in the tower with the purpose of applying more power to the turbine blades, and in the center, the SOLAR OVEN, the more amount of air is compressed.When this air is heated for the action of the solar concentrators, experiments a significant expansion of the air, and so, more power in the turbine that communicates with a spindle to the dynamo-alternator. What it is pretended with this is to get a higger quantity of electric power than with the means use so far used.

In this type of towers, where the final superior part is used (as a SOLAR OVEN) could also be suitable for what we are looking for, to use, but in the base, oil at high temperatures, or ceramic, saline or another type of heat accumulators, since the purpose of all of them is to store calorific energy to apply it directly,at night or hours without sun. In our project we also use the exchanger of heat located in the area of the solar oven and whose function is to get in the lack of sun, as we said in the center of the solar oven, where the oil flows at high temperature, like in the power stations of high temperature, it can get up to 3.000 °C and it is stored in the solar hours, overheating the air, giving, as it is expanded by the effect of the heat received when passes through the sheets of the exchanger of heat, more power and speed to the turbine that moves the dynamo and the alternator after all.

### Antecedents of the invention

Other than the patent of Spanish utility presented U200600388 on February 22 2.006 and published its concession the 01-10-2.006 where the present patent emerges from, the antecedents of this invention come from several fields that behave in an independent way from the one presented here like the heliostats and solar concentrators, used to heat different types of fluids; the towers, central of high temperature, the towers of ascension of air irradiated in glass areas due to the hothouse effect, and that it has been already used in different ways and formats for more than thirty years; the wind and eolic mills, the turbines of gas and similars, the solar ovens to heat different fluids, air, oil, water that are applied to exchangers of heat to get vapour. All these are individual antecedents that, in their group and in a novel way, are used in this utility patent with the purpose of trying to overcome the indexes of power to develop in the towers of ascension of hot air, in order to applying them to generators of electric current.

The tower of ascension of air irradiated by the sun in a land covered with transparent matter, independently of having been studied during many years and give good results, has some inconveniences that our design tries to eliminate. In the tower of ascension, to get a speed of ascension there has to be an enormous height with the purpose of having its exit partly in the atmosphere that is colder and with less atmospheric pressure than in its base, which has more pressure and the air is hotter by itself. It bears enormous heights and enormous costs in the installation and construction difficult to compensate with the resulting energy. Since, in spite of the height and of the propelers and turbines that have been proven up to now, the results are not compensable neither satisfactory. That is the reason why with the grouping of different systems, as the one of heating the air in a part of the tower operating under, or preferably, in the center of a turbine of gas, but without any fossil neither biological fuel, only with heliostats or solar concentrators and the sun, we get over the difficulty and get more power and speed with insignificant equipment beside the previous ones and therefore, of very inferior cost to the previous models that have been already used for more than twenty years.

### Brief description of the drawings:

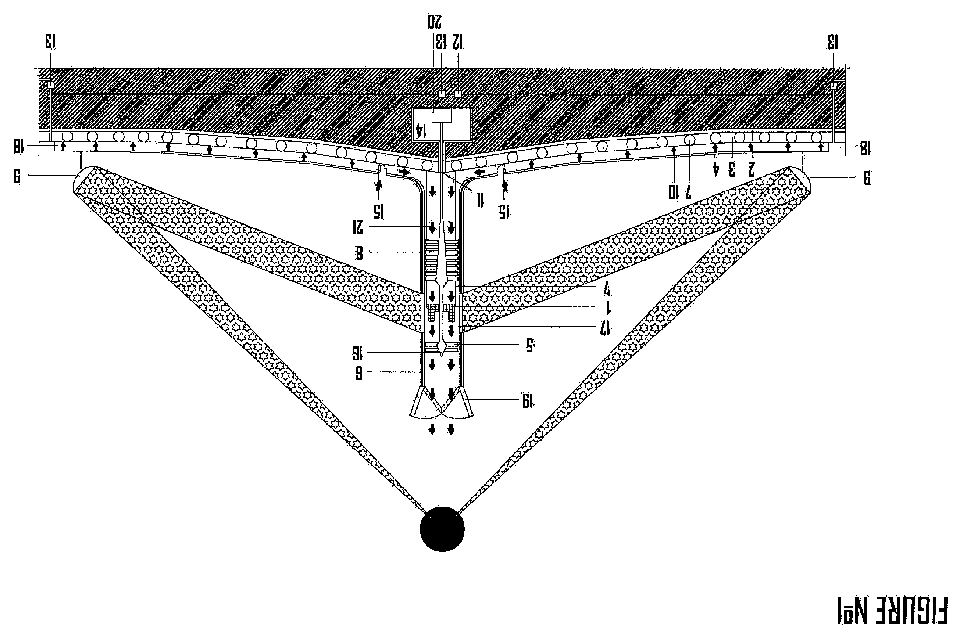

Figure n° 1 is a descriptive figure of the parts that the present patent is consisted: part (6) is the tower itself, from the superior part to the base, where is united to the glass area. The interior wall of the whole tower should be covered of isolated material, with the purpose of avoid the minimum possible loss of the ascendent air temperature which circulates for its interior. The marked as (2) it is also the isolation of the base and is located between the land and the accumulators with the purpose of avoid losses of temperature in these ones. The indicate as (3) marks the accumulators that can be made of ceramic, saline etc, these ones accumulate the temperature during the sun hours and transmit part of that heat to the pipes that are marked as (7) This heat, circulates for the whole circuit of solar irradiation and also for the heat exchanger (1) which is inside the solar oven. The heat exchanger is situated in vertical position during the sun hours with the purpose of capture the highest temperature possible and transmit it to the circuit, that is closed at the begining and moved by a bomb (12) and for that circuit, like we said previously, circulates a type of fluid: for example, some type of oil that, once it reaches certain temperature, useful for some types of works, the controling valves, marked as (13), open up and let pass through the high temperature oil to an external accumulator where stores it for the night hours, or can also be used to generate realtime convection energy by other heat exchangers. The glasses that cover the accumulators (3) and the pipes (7) marked as (4) have the function to let pass the sunbeams and avoid the infrareds leak and storing the heat in the ceramic accumulators (3), in the oil that circulates for the pipes (7) and the heat exchanger (1).

The sluices marked as (15), in the sun hours and once the turbine has been pulled up (16), rotate for the ascendent air (9) moving its inferior blades (8) and for the expansion of the air in the solar oven (17), air that accelerates the superior blades itself(5), are closed to the part of solar irradiation covered by glasses (4), allowing the pass of the air on the superior part and avoiding the air circulation in the hothouse (10) and the entrance of cold air (18), with the purpose of store the the biggest quantity of high temperature accumulation in the accumulators (3), in the fluid that circulates through the pipes (7) and in the heat exchanger (1) located in the solar oven (17). This solar oven (17) is formed of a transparent part where receives the light of the solar concentrators (9) and has a covered interior, opaque to the exterior, form of reflective material to distribute the received solar radiation and apply the most of it to the air and to the heat exchanger (1) through this, as we said, runs a fluid heated at high temperature.

Once the start up process has been initiated and works normal, the turbine power is applied to the connection (11) that could have in a begining a " speed gearbox " that (to reduce or to enlarge the turns) passing to a direct connection, shortened or enlarged , according to the power and speed that we want to apply to the dynamo-alternator (20) located in a control room (14).

In the superior part of the tower we have a floodgates (19) with the purpose of regulate the air exit, and also to close them in the continuous hours without sun, this depends on the accumulated energy and on the energy we want to develop, it could be, approximately 72 hours. We said they close to avoid the lost of heated energy applied to the irradiation area covered with glass (4) by the indirect light through the clouds. Because the floodgates situation and the possibility of having a exceed of temperature in the entrance of the air exit, these could be radiator type that absorbed this temperature and, the same as the temperature exchanger (1) located in the solar oven (17), it could heat fluids and take advantage of their temperature.

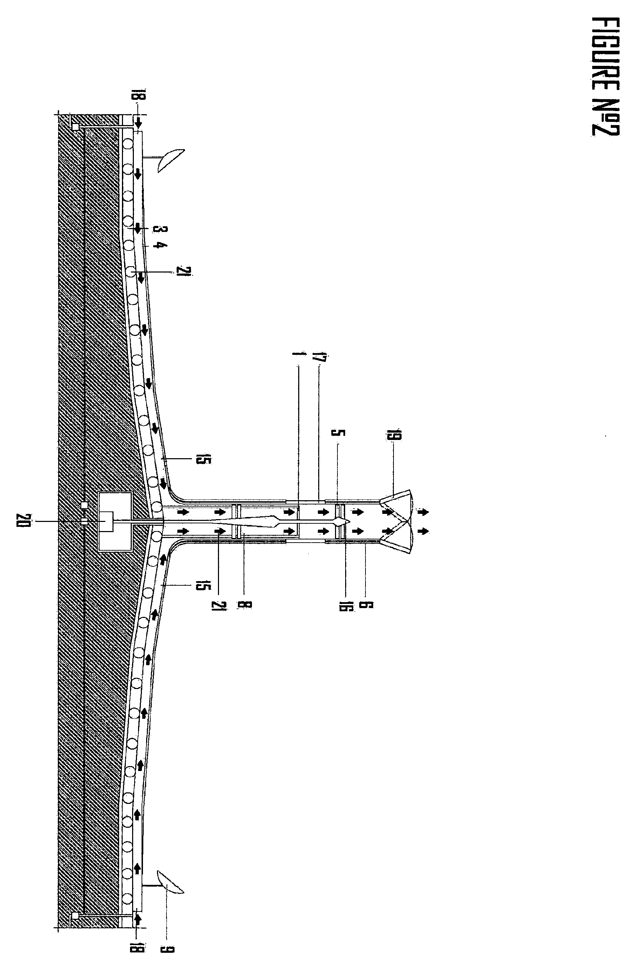

In the figure n° 2, we are in the solar tower function phase in the hours without sun, in which has been carried out some transformations to use the energy accumulated during the hours of solar irradiation: The sluices (15) have opened up to the interior of the glass part (4) and for the entrances (18) the air from the exterior circulates for and through the accumulators (3) that have in its superior part a sheets that project with the purpose of applying better the heat of the circulating air, from the exterior to the interior of the tower (6) where ascends and move the inferior blades (8) that have transformed decreasing or equalizing the number of the blades. The pipes (21) that are in contact with the accumulators are now without any circulation. The ascendent air penetrates in the chamber in the center of the turbine (16) that we call solar oven (17) and gets through the heat exchanger (1) which is now in horizontal position, heating the air by convection, and for bigger expansion of the air it ascends to the superior blades (5) accelerates the turbine (6) and therefore the power. The circulation of the oil that has been stored during the irradiation hours, now, in the hours without sun, it circulates only through the temperature exchanger (1) with the purpose of overheat the air (9) in the solar oven (17) and to achieve more power to transmit to the dynamo-alternator (20)

## Claims

1. A hot air ascent tower (6), in part of which transparent material (17) has been employed, said part being that to which the solar energy from mirrors, solar concentrators or heliostats (9) is applied in order to heat the air, accelerating the ascent rate of the same and causing one or several propellers or turbines containing a dynamo-alternator to move, or, by mechanical means, either directly or through a reduction gearbox or a revolution augmenter (11), causing a dynamo-alternator (20) to move.

2. A hot air ascent tower (6), in the transparent part of which where the solar energy from mirrors, concentrators or heliostats (17) is applied, as per claim 1, a gas-type turbine (16) has also been installed so as its centre receives the solar radiation and, by air expansion, as occurs in reactors, but which occurs without the use of any fuel, using only solar energy, causes one or several turbines to move, this movement being transmitted to a dynamo-alternator.

3. A hot air ascent tower (6), in the transparent part of which where the solar energy from mirrors, concentrators or heliostats (17) is applied, and in which a gas-type turbine (16) or similar has been installed so as its centre receives the solar radiation and, by air expansion, as occurs in reactors, but which occurs without the use of any fuel, using only solar energy, causes the turbine to move, this movement being transmitted to a dynamo-alternator, as per claims 1 and 2, in which, furthermore, in the centre of the turbine (16) or in the upper part (19), a heat exchanger (1) has also been installed that, during the day, transfers the heat that it receives to a type of fluid to be used either immediately or subsequently, as indicated in (1), and that during the hours when there is no sunlight heats the air that passes through the centre of the turbine in order to increase the air temperature, increase the ascent rate and therefore increase the power applied to the dynamo-alternator.

4. A hot air ascent tower (6), in the transparent part of which where the solar energy from mirrors, concentrators or heliostats (17) is applied, and in which a gas-type turbine (16) or similar has been installed so as its centre receives the solar radiation and, by air expansion, as occurs in reactors, but which occurs without the use of any fuel, using only solar energy, causes the turbine to move, this movement being transmitted to a dynamo-alternator (20) in which, in the centre of the turbine (16) or in the upper part (19), a heat exchanger (1) has been installed that, during the day, transfers the heat that it receives to a type of fluid to be used either immediately or subsequently, as indicated in (1), and that during the hours when there is no sunlight heats the air that passes through the centre of the turbine in order to increase the air temperature, increase the ascent rate and therefore increase the power applied to the dynamo-alternator, as per claims 1, 2 and 3, and in which, furthermore, at the back of the interior of the opaque section of the tower in the part that is behind the transparent section of the solar oven on which the rays of sunlight from the concentrators are incident, a reflective material, mirror or concentrator has been installed to distribute and concentrate all of the light energy received in the air within the solar oven (17) or in the heat exchanger (1) or other apparatus within this section of the tower into which the solar energy is transmitted.
Each of the aforementioned claims 1, 2, 3 and 4 may be taken singly or jointly with the preceding claim or claims if said claim may be used to enhance the hot air ascent tower.
